# FASCICULE DE BREVET EUROPEEN

(11) **EP 0 650 416 B1**
(45) Date de publication et mention de la délivrance du brevet: **03.11.1999**
(21) Numéro de dépôt: 94916282.0
(22) Date de dépôt: 13.05.1994
(51) Int. Cl.: B60J 3/02

(54) **LUNETTE DE PROTECTION CONTRE L'EBLOUISSEMENT POUR TOUT VEHICULE**
SONNENBLENDE, DIE DIE BLENDUNG DURCH ENTGEGENKOMMENDE FAHRZEUGE VERHINDERT.
GLARE REDUCING VISOR FOR VEHICLES.

(30) Priorité: 13.05.1993 FR 9305789
(43) Date de publication de la demande: 03.05.1995
(73) Titulaire: ALULA, Makita Georges, 95560 Osny (FR)
(72) Inventeur: ALULA, Makita Georges, 95560 Osny (FR)
(86) Numéro de dépôt international: FR9400572
(87) Numéro de publication internationale: WO9426543

(56) Documents cités:
- WO-A-86/02322
- DE-U- 8 901 348
- FR-A- 1 132 147
- IT-A- 527 066
- US-A- 2 517 872
- US-A- 2 673 118
- US-A- 3 679 255
- US-A- 4 195 876

## Description

La présente invention concerne un dispositif permettant de faire face aux problèmes d'éblouissement de toute nature (soleil, feux de croisement, feux anti-brouillard...) dans les engins mobiles de tout type. Plus particulièrement, elle concerne un dispositif permettant d'accroître la protection anti-solaire des automobilistes de manière permanente.

Cette protection est traditionnellement réalisée au moyen d'un pare-soleil opaque. Cette pièce qui reste parfois inefficace, entraîne souvent un recours à des lunettes de protection solaire que le conducteur n'a pas toujours dans son véhicule; tant bien même les aurait-il, le temps nécessaire pour les trouver, les dépoussiérer, les mettre, etc..., s'ajoute au temps de réaction, d'où certains accidents et collisions frontales souvent inexpliqués.

De plus, le système traditionnel assure uniquement une protection sur le côté gauche du conducteur (pour un véhicule à conduite à gauche), par pivotement ou rotation du pare-soleil, de la droite vers la gauche, et est totalement inefficace au centre du pare-brise.

Le recours à une lunette transparente complémentaire ou non pour accroître la protection est connu. Par exemple, le document US-A-2 673 118 relate un dispositif couvrant la partie centrale et les bords du pare-brise, et comportant des parties auxiliaires montées à pivotement exactement comme un pare-soleil conventionnel, mais se substituant à un tel pare-soleil et non s'adaptant à un tel pare-soleil. Le dispositif couvre toute la largeur du pare-brise du véhicule, et les parties auxiliaires peuvent être relevées ou mises latéralement côté portière ou rester dans le plan de la partie immobile du dispositif.

Le document DE-U-89 01 348 décrit un pare-soleil complémentaire d'un pare-soleil classique déjà existant qui est fixé de façon articulée par sa partie supérieure à la partie supérieure du pare-soleil de manière à être utilisé à la place de ce dernier et non en complément de ce dernier. Une jonction à rotule est prévue pour que le pare-soleil puisse prendre une position latérale extérieure (vers la portière) et non une position centrale (vers le rétroviseur central).

Le document US-A-2 517 872 enseigne l'utilisation d'une lunette adjointe à un pare-soleil, la lunette pouvant être librement déplacée par le conducteur du véhicule ainsi équipé en fonction de ses impératifs visuels.

La lunette, selon ce document, est fixée sur la face arrière du pare-soleil au moyen d'une tige en forme d'équerre dont une branche constitue l'axe de rotation de la lunette parallèle à l'axe horizontal du pare-soleil, et l'autre branche constitue un axe de rotation parallèle à l'axe vertical du même pare-soleil. La branche verticale est fixée centralement sur la face arrière du pare-soleil.

Le pare-soleil et la lunette ne peuvent être situés dans un même plan, puisqu' ils sont matériellement décalés l'un de l'autre ; ils sont, au mieux, dans des plans parallèles. Ceci a pour conséquence immédiate que tout angle entre ces deux éléments ne peut en aucun cas être possible.

Dans le brevet italien IT-A-0 527 066, il en est de même, l'axe support de la lunette ne pouvant, en aucun cas, être dans le plan du pare-soleil.

Le brevet français FR-A-1 132 147 concerne essentiellement le principe d'une fixation à pince d'une lunette amovible sur un pare-soleil. Ce document est, par contre, totalement muet sur les moyens de mise en oeuvre de cette pince.

D'une manière générale, les systèmes proposés offrent une solution basée sur une rotation de la lunette transparente autour d'un axe vertical ou horizontal par rapport au toit du véhicule au moyen de différents systèmes de fixation.

Cette fixation de la lunette transparente dans sa partie supérieure gauche a fait que les systèmes qui ont été proposés imposent, d'une part, une fixation de la lunette sur le pare-soleil avec des mouvements coordonnés et solidaires de la lunette et du pare-soleil et, d'autre part, un dédoublement du pare-soleil, c'est à dire le montage d'une lunette qui viendrait par moment, recouvrir la totalité de la surface du : pare-soleil opaque entraînant ainsi de multiples manipulations.

Le dispositif selon l'invention permet de remédier à cet inconvénient.

On comprend que les expressions "partie supérieure" et partie inférieure" doivent s'entendre lorsque l'ensemble pare-soleil et lunette est totalement déployé dans un plan vertical.

Par "lunette", on entend un élément sensiblement transparent venant en complément d'un pare-soleil généralement opaque fixé au véhicule.

L'invention concerne donc une lunette transparente, notamment pour véhicule possédant un pare-brise, cette lunette étant complémentaire d'un pare-soleil opaque et étant fixée, de façon articulée au pare-soleil par un moyen de liaison comportant deux parties permettant une rotation de la lunette par rapport au pare-soleil, la première partie permettant une désolidarisation de la lunette par rapport au pare-soleil, la première partie étant disposée sensiblement à une extrémité de ladite partie supérieure de la lunette et de la partie inférieure du pare-soleil (Lunette du type divulgué dans IT-A-0 527 066).

Selon l'invention, ladite deuxième partie est disposée sensiblement à l'extrémité opposée de la partie supérieure de la lunette et de la partie inférieure du pare-soleil, de telle manière que la rotation soit dans un premier axe appartenant au plan du pare-soleil et passant par les première et deuxième parties, et la deuxième partie détermine, en outre, une articulation à rotule autour d'un point de la partie supérieure de la lunette.

Selon un premier mode préféré de réalisation, la première partie du moyen de liaison est constituée d'un crochet verticalement fixé au pare-soleil et recevant la lunette, et la deuxième partie du moyen de liaison est essentiellement constituée d'une tige horizontale et d'une deuxième tige, la tige horizontale formant axe horizontal de rotation pénétrant dans un perçage horizontal pratiqué dans la lunette et ayant un épaulement à une extrémité, la tige horizontale étant pourvue d'un orifice destiné à recevoir la deuxième tige formant axe vertical de rotation perpendiculaire au premier axe, la deuxième tige étant fixée au pare-soleil.

Selon un deuxième mode préféré de réalisation, l'orifice prévu dans la tige horizontale est destiné à coopérer avec l'extrémité en forme de rotule de la deuxième tige dont l'autre extrémité est fixée au pare-soleil.

Des modes de réalisation préférés font l'objet des sous-revendications.

Ainsi, la partie centrale du pare-brise où se situe normalement un rétroviseur peut également être protégée, et la lunette est d'une manipulation très aisée, tandis que son coût est réduit.

La lunette transparente pourra être favorablement teintée, présenter une propriété d'anti-réflexion de la lumière (anti-reflet) et/ou, selon les modèles, des propriétés lui permettant d'absorber progressivement de la lumière en fonction de l'intensité des rayons incidents.

C'est donc l'originalité du moyen de liaison de la lunette au pare-soleil qui particularise la présente invention.

Il faut noter, dans ce qui suit, que l'on se réfère à un véhicule à conduite à gauche. L'invention n'est cependant pas limitée à ce seul type de véhicule, l'application de l'invention à un véhicule à conduite à droite étant obtenue par simple symétrie axiale.

Ainsi, on se protégera des lumières frontales directes par l'abaissement de la lunette vers le pare-brise. De même, la lunette pourra être décrochée du pare-soleil opaque sur son côté supérieur gauche, puis tournée vers la droite pour venir dans la partie centrale du pare-brise en regard du rétroviseur.

L'invention sera mieux comprise, et d'autres buts, avantages et caractéristiques de celle-ci apparaîtront plus clairement à la lecture de la description qui suit de modes préférés de réalisation donnés à titre non limitatif et à laquelle cinq planches de dessins sont annexées sur lesquelles :
La Figure 1 A représente schématiquement, avec certaines parties agrandies, un mode de réalisation de l'invention;
La Figure 1 B illustre l'ouverture de la lunette selon l'invention;
La Figure 2 représente une vue éclatée d'un mode de réalisation de la lunette selon l'invention;
Les Figures 3 A, B et C illustrent de façon plus détaillée certains moyens préférés de liaison de la lunette au pare-soleil; et
Les Figures 4.1 à 4.7 représentent schématiquement différentes configurations possibles de la lunette selon l'invention.

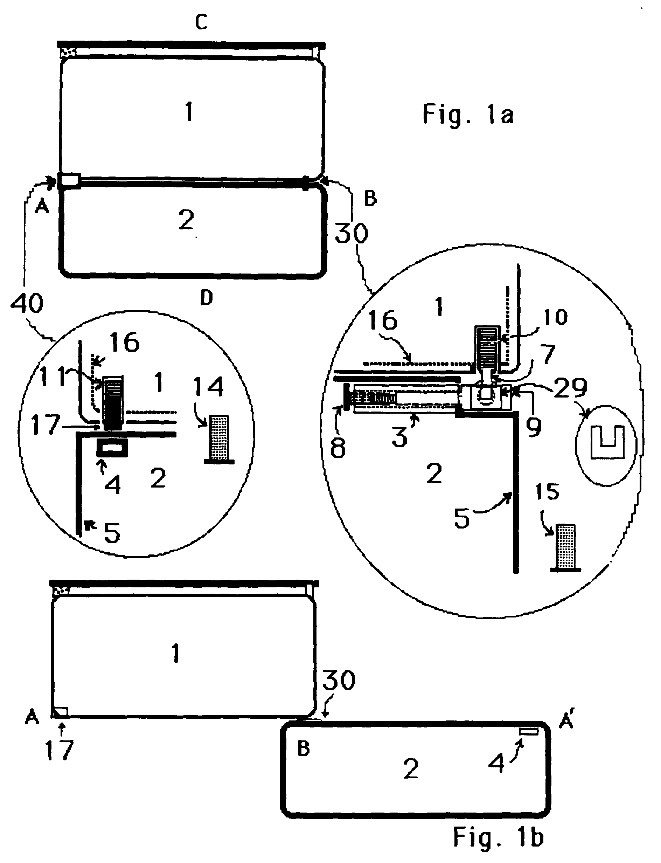

En référence maintenant aux Figures qui viennent d'être succinctement décrites, le dispositif illustré Figure 1 comprend un pare-soleil opaque 1 et une lunette 2 transparente pour la lumière, lunette qui est fixée à la partie inférieure du pare-soleil 1 par un moyen de liaison 40, 30 en deux points de fixation. La lunette est escamotable à son point de fixation supérieur gauche 40 et est fixée sur la partie supérieure droite 30 par un moyen d'articulation 7, 8, 9.

La partie 30 du moyen de liaison formant articulation comprend une tige horizontale 9 en forme de vis mâle pourvue en extrémité d'un épaulement permettant de coopérer avec une deuxième tige 7 formant articulation et pénétrant dans un écrou prévu dans la partie inférieure correspondante du pare-soleil.

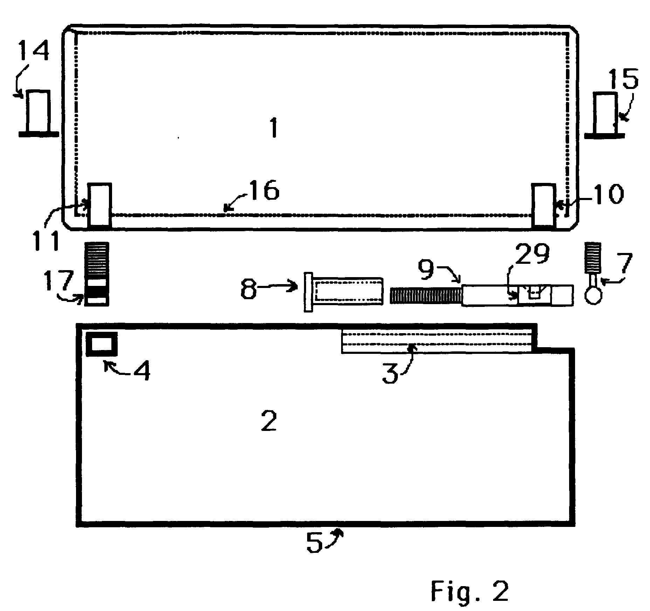

Selon le mode de réalisation illustré Figures 1 A et 2, cette articulation est obtenue en prévoyant une rotule coopérant avec un orifice pratiqué dans la tige horizontale 9, dont l'extrémité filetée est reçue dans un perçage horizontal 3 de la lunette 2, et y est maintenue par vissage d'une vis femelle 8 formant écrou.

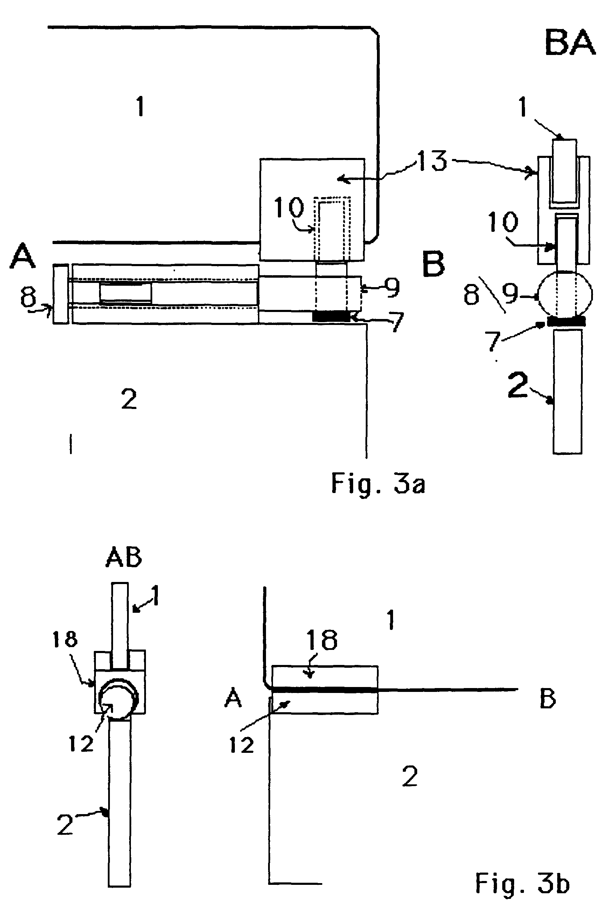

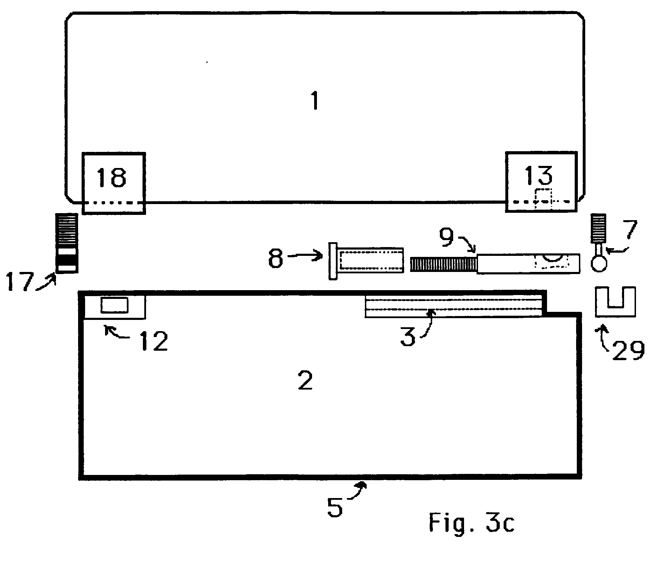

Selon le mode de réalisation représenté Figure 3, l'articulation est obtenue en pratiquant un orifice dans la tige horizontale 9, cet orifice étant traversé par la deuxième tige 7. Ainsi la deuxième tige 7 forme un axe de rotation perpendiculaire à la tige horizontale 9.

La partie 40 du moyen de liaison de la lunette 2 au pare-soleil 1 est réalisé en fixant un crochet 17 au pare-soleil 1, par exemple, dans un trou en forme d'écrou percé dans la partie inférieure gauche 11 de son armature 16. La lunette 2 se fixe au crochet 17, par exemple, par introduction dans un orifice 4 ménagé dans la partie supérieure gauche de celle-ci.

On peut prévoir deux modes de réalisation génériques de la lunette conforme à l'invention, selon qu'elle est montée d'origine sur le véhicule ou qu'elle est un accessoire apporté ultérieurement.

Dans le cas où la lunette est montée d'origine, les deux parties 30, 40 du moyen de liaison seront montées préalablement dans le pare-soleil opaque 1. Les trous 10, 11 de ces deux parties pourront être éventuellement et très aisément bouchés à l'aide de bouchons 14, 15 (Figures 1 A et 2) en cas de non-montage de la lunette 2. Par ailleurs, ce moyen de liaison permet de choisir la lunette en fonction de la demande du client (teinte, qualité, etc...).

Dans le cas où la lunette est un accessoire apporté ultérieurement, le principe de la manipulation de la lunette reste acquis également par les éléments constitutifs décrits ci-avant. La Figure 3 B représente dans le plan horizontal un dispositif de fixation par rotule dans une pièce 18 qui relie par pincement la partie inférieure droite du pare-soleil 1 à la partie supérieure droite de la lunette 2. L'accrochage de la lunette 2 sur son côté supérieur gauche peut alors se faire par simple pression de la partie arrondie 12 prévue à la partie supérieure gauche de la lunette 2 sur la pièce formant pince 18 qui aura été préalablement fixée au pare-soleil 1 et comportant à sa base un évidement de forme correspondante.

De même, l'articulation de droite est alors fixée à une pièce rapportée 13 (Figure 3 A) de même nature que la précédente pince 18 et préalablement fixée au pare-soleil 1 (Figure 3 C) par pincement, à la base de laquelle un orifice taraudé a été pratiqué.

Ainsi, avec le bénéfice de l'invention, la lunette 2 peut être placée sensiblement en regard du rétroviseur central du véhicule, comme représenté Figure 1 B en position complètement ouverte, et ainsi protéger le conducteur de la lumière arrivant soit de face, soit de côté, dans une zone qui est habituellement non protégée.

Le pare-soleil peut être favorablement muni d'une armature 16 (Figure 2) dont les extrémités inférieures gauche et droite présentent chacune un trou 10, 11 destiné à la fixation de des moyens de liaison 30, 40 de la lunette 2 sur le pare-soleil 1.

Pour le montage, on relie la lunette 2 au pare-soleil 1 en fixant la tige 7 de la partie 30 du moyen de liaison dans l'orifice 10 prévu dans le pare-soleil (Figure 1 A) ou dans la pièce rapportée 13 (Figure 3 A). D'une manière favorable, lorsque la tige 7 se termine par une rotule (Figures 1 A et 3 C), elle sera préalablement introduite dans une pièce en plastique 29 qui viendra se clipser dans la tige horizontale 9.

On fixe ensuite le crochet 17 éventuellement pourvu d'un filetage ou d'une pince 18, sur le pare-soleil 1, puis on accroche la lunette 2 par l'ouverture 4 de l'anse définie sur sa partie supérieure gauche.

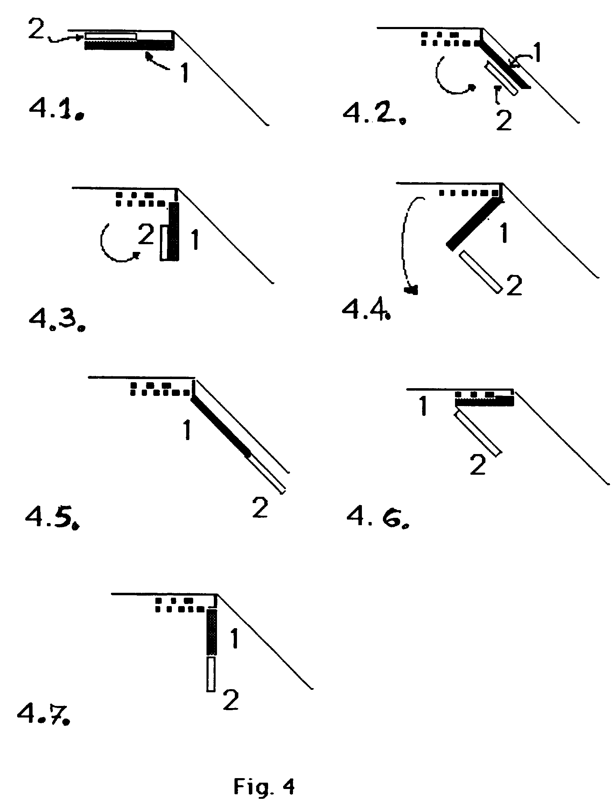

La lunette selon l'invention, dans son mode de réalisation préféré, comme montré sur les Figures 4, peut prendre aisément diverses positions. Lors de l'utilisation normale du pare-soleil (Figures 4.2 ou 4.3), la lunette n'est pas utilisée. Elle peut être en position verticale (Figure 4.7) ou en position d'ouverture avancée (Figure 4.5) en fonction de la taille du conducteur ou du degré d'éblouissement (Figures 4.4 et 4.6).

La lunette 2 représentée Figure 4.1 est en position de repos, c'est à dire entre le pare-soleil 1 et le toit du véhicule. Lorsque le pare-soleil 1 est abaissé (Figure 4.3), la lunette peut être descendue par simple rotation (Figures 4.4, 4.5, 4.7).

Comme on peut le constater Figures 4.4 et 4.6, il est possible, pour le conducteur, de ne disposer que du confort de la lunette lorsqu' il est ébloui par des feux de croisement ou équivalents, la lunette transparente pouvant être utilisée comme une lunette ordinaire, c'est à dire sans déploiement du pare-soleil (Figure 4.6).

Selon le mode de réalisation, la lunette pourra être réalisée en un matériau polymère (polycarboné par exemple) et être interchangeable et/ou être garnie d'une monture 5 dans laquelle pourra glisser la partie transparente de la lunette.

Bien que l'on ait représenté et décrit ce que l'on considère actuellement être les modes de réalisation préférés de la présente invention, il est évident que l'Homme de l'Art pourra y apporter différents changements et modifications sans sortir du cadre de la présente invention tel que défini par les revendications jointes.

## Revendications

1. Lunette transparente (2), notamment pour véhicule possédant un pare-brise, la dite lunette (2) étant complémentaire d'un pare-soleil opaque (1) et étant fixée, de façon articulée au dit pare-soleil (1) par un moyen de liaison (40, 30) comportant deux parties (40, 30) permettant une rotation de la dite lunette (2) par rapport au dit pare-soleil (1), la première partie (40) permettant une désolidarisation de la lunette (2) par rapport au pare-soleil (1), la première partie (40) étant disposée sensiblement à une extrémité de ladite partie supérieure de la lunette (2) et de la partie inférieure du pare-soleil (1)
**caractérisée en ce que**
ladite deuxième (30) partie est disposée sensiblement à l'extrémité opposée de la dite partie supérieure de la lunette (2) et de la partie inférieure du pare-soleil (1), de telle manière que la dite rotation soit dans un premier axe appartenant au plan du dit pare-soleil (1) et passant par les dites première et deuxième parties, et
**que** la dite deuxième partie (30) détermine, en outre, une articulation à rotule autour d'un point de la partie supérieure de la lunette (2).

2. Lunette selon la revendication 1 caractérisée en ce que la dite première partie (40) du dit moyen de liaison est constituée d'un crochet (17, 18) verticalement fixé au dit pare-soleil (1) et recevant la dite lunette (2), et en ce que la dite deuxième partie (30) du dit moyen de liaison est essentiellement constituée d'une tige horizontale (9) et d'une deuxième tige (7), la dite tige horizontale (9) formant axe horizontal de rotation pénétrant dans un perçage horizontal (3) pratiqué dans la dite lunette (2) et ayant un épaulement à une extrémité, la dite tige horizontale (9) étant pourvue d'un orifice destiné à recevoir la dite deuxième tige (7) formant axe de rotation perpendiculaire au dit premier axe, la dite deuxième tige (7) étant fixée au pare-soleil (1).

3. Lunette selon la revendication 1 caractérisée en ce que la dite première partie (40) du dit moyen de liaison est constituée d'un crochet (17, 18) verticalement fixé au dit pare-soleil (1) et recevant la dite lunette (2), et en ce que la dite deuxième partie (30) du dit moyen de liaison est essentiellement constituée d'une tige horizontale (9) et d'une deuxième tige (7), la dite tige horizontale (9) formant axe horizontal de rotation pénétrant dans un perçage horizontal (3) pratiqué dans la dite lunette (2) et ayant un épaulement à une extrémité, la dite tige horizontale (9) étant pourvue d'un orifice (31) destiné à coopérer avec l'extrémité en forme de rotule de la dite deuxième tige (7) dont l'autre extrémité est fixée au- pare-soleil (1).

4. Lunette selon la revendication 2 ou 3 caractérisée en ce que le dit pare-soleil comporte une armature (16) dans la partie inférieure de laquelle sont fixés deux écrous à axe vertical dans lesquels respectivement le crochet (17) de la dite première partie (40) du dit moyen de liaison et la deuxième tige (7) de la dite deuxième partie (30) sont engagés.

5. Lunette selon la revendication 2 ou 3 caractérisée en ce que, aux extrémités opposées de la partie inférieure du dit pare-soleil (1), sont pratiqués deux trous (10, 11) à axe vertical dans lesquels respectivement le crochet (17) de la dite première partie (40) du dit moyen de liaison et la deuxième tige (7) de la dite deuxième partie (30) peuvent être engagés, des bouchons (14, 15) étant prévus pour fermer les dits trous (10, 11) lorsque la dite lunette (2) n'est pas montée sur le pare-soleil (1).

6. Lunette selon la revendication 2 ou 3 caractérisée en ce que le crochet (18) de la première partie (40) du dit moyen de liaison présente une partie en forme de pince qui est fixée au dit pare-soleil (1).

7. Lunette selon l'une quelconque des revendications 2 à 6 caractérisée en ce qu'une anse (4) est ménagée dans la lunette (2) pour coopérer avec le dit crochet (17).

8. Lunette selon l'une quelconque des revendications 2 à 6 caractérisée en ce que l'évidement du dit crochet (18) affecte une forme correspondante à celle de la partie supérieure de la dite lunette (2).

9. Lunette selon l'une quelconque des revendications précédentes caractérisée en ce qu'elle est garnie d'une monture adaptable (5).

## Claims

1. A transparent visor (2), notably for a vehicle possessing a windshield, said visor (2) being complementary to an opaque sun visor (1) and being fastened, hinged by its upper portion to the lower portion of said sun visor (1) by means of a connecting system (40, 30) composed of a first (40) and a second parts (30), the connecting system (40, 30) allow the rotation of the transparent visor (2) according to the opaque visor(1), the first parts (40) enable the transparent visor (2) to be separated from the opaque visor (1), the first parts (40) is substantially placed, respectively, at the top of the transparent visor (2) and the bottom of the opaque visor (1), is characterized by the fact that the said second parts (30) is placed substantially at the opposite ends of said upper portion of the transparent visor (2) and of the lower part of the opaque visor (1) respectively, in such way that the said rotation is in the first axis along the plane of such sun visor (1) and passing trough the first (40) and the seconds parts (30), and the said second parts (30) provides, moreover, a movable hinge around a point of the upper portion of the transparent visor (2)

2. A visor according to Claim 1 wherein said first part (40) of said means of connecting system is composed of a hook (17, 18) vertically-attached to said main visor (1) and receives said visor (2), and wherein said second part of said means of connecting system is essentially composed of a horizontal rod (9) forming a horizontal axis of rotation that enters a horizontal aperture (3) made in said visor (2) and having a shoulder support at one end, said horizontal rod (9) being equipped with an opening mean to receive said second rod (7) forming an axis of rotation perpendicular to said first axis, said second rod (7) being fastened/attached to the main visor (1).

3. A visor according to Claim 1 wherein said first part (40) of said means of connecting system is composed of a hook (17, 18) vertically attached to said main visor (1) and receives said visor (2), and wherein said second part (30) of said means of connecting system is essentially composed of a horizontal rod (9) and of a second rod (7), said horizontal rod (9) forming a horizontal axis of rotation that penetrates a horizontal opening made in said visor (2) and having a shoulder support at one end, said horizontal rod (9) being equipped with an opening designed to cooperate with the end in the form of a socket of said second rod (7) in which the other end is fastened to the main visor (1).

4. A visor according to Claims 2 or 3 wherein said opaque visor has a framework (16) in the lower portion in which two nuts have been fastened at a vertical axis at which the hook (17) of said first part (40) of the means of a connecting system and the second rod (7) of said second part (30) are respectively set up.

5. A visor according to Claims 2 or 3 wherein, to the opposite ends of the lower portion of said main visor (1), have been made two holes (10, 11) to a vertical axis in which respectively the hook (17) of said first part (40) of said means of a connecting system and the second rod (7) of said second part (30) can be used stoppers (14, 15) being planned for to close said holes (10, 11) when said visor (2) is not mounted onto the main visor (1).

6. A visor according to Claims 2 or 3 wherein the hook (18) of the first part (40) of said means of a connecting system presents one part in the form of a clip that is fastened to said opaque visor (1).

7. A visor according to any one of Claims 2 through 6 wherein an opening (4) is cut out of the transparent visor (2) to go together with said hook (17).

8. A visor according to any one of Claims 2 through 6 wherein the hollow section of said hook (18) takes on a form corresponding to that of the upper portion of said transparent visor (2).

9. A visor according to any one of the preceding claims wherein it is fitted with an adaptable frame setting (5).

## Patentansprüche

1. Durchsichtige Blende (2), insbesondere für ein Fahrzeug mit Windschutzscheibe, wobei besagte Blende (2) die undurchsichtige Sonnenblende (1) ergänzt. Die bewegliche Befestigung an zitierter Sonnenblende (1) erfolgt durch ein Verbindungssystem (40, 30), das aus zwei Teilen (40, 30) besteht, und das eine Drehbewegung der Blende (2) in bezug auf die besagte Sonnenblende (1) erlaubt. Der erste Teil (40) erlaubt ein Lösen der Blende (2) von der Sonnenblende (1), wobei der erste Teil (40) deutlich an der äußeren Oberkante der Blende (2) und an der Unterkante der Sonnenblende (1) angeordnet ist. Die Blende ist **gekennzeichnet dadurch,** daß der genannte zweite Teil (30) sich deutlich auf der gegenüberliegenden äußeren Oberkante der Blende (2) und der Unterkante der Sonnenblende (2) befindet. Auf diese Weise erfolgt die erwähnte Drehbewegung um eine erste Achse, die in der Ebene der Sonnenblende (1) liegt, und die durch die zitierten ersten und zweiten Teile geht. Der zweite Teil (30) läßt darüber hinaus eine Kugelgelenkbewegung um einen Punkt der Oberkante der Blende (2) zu.

2. Blende gemäß Erfindungsanspruch 1, gekennzeichnet daduch, daß der erste Teil (40) der Verbindung beider Blenden aus einem Haken besteht (17, 18), der senkrecht an der Sonnenblende (1) befestigt ist und in die Blende (2) eingreift. Der zweite Teil (30) des besagten Verbindungssystems setzt sich hauptsächlich aus einem horizontalen Stab (9) und einem zweiten Stab (7) zusammen, wobei besagter waagerechter Stab (9), der die horizontale Drehachse bildet, in einer horizontalen Bohrung (3) in der Blende (2) gelagert ist und eine Abstützung am äußeren Ende besitzt. Der horizontale Stab (9) hat eine Öffnung, die den zweiten Stab (7) aufnimmt, der an der Sonnenblende (1) befestigt ist, und der so eine Drehachse bildet, die senkrecht zur ersten Achse ausgebildet ist.

3. Blende gemäß Erfindungsanspruch 1, gekennzeichnet daduch, daß der erste Teil (40) der Verbindung beider Blenden aus einem Haken besteht (17, 18), der senkrecht an der Sonnenblende (1) befestigt ist und in die Blende (2) eingreift. Der zweite Teil (30) des besagten Verbindungssystems setzt sich hauptsächlich aus einem horizontalen Stab (9) und einem zweiten Stab (7) zusammen, wobei besagter waagerechter Stab (9), der die horizontale Drehachse bildet, in einer horizontalen Bohrung (3) in der Blende (2) gelagert ist und eine Abstützung am äußeren Ende besitzt. Der horizontale Stab (9) hat eine Öffnung (31), die das als Kugelkopf geformte untere Ende des zweiten Stabs (7) aufnimmt, dessen oberes Ende an der Sonnenblende (1) befestigt ist.

4. Blende gemäß Erfindungsanspruch 2 oder 3, gekennzeichnet dadurch, daß besagte Sonnenblende einen Beschlag (16) trägt, in dessen unterem Teil zwei Schraubenmuttern mit senkrechter Achse befestigt sind, die jeweils den Haken (17) des ersten Teils (40) des besagten Verbindungssystems und den zweiten Stab (7) des zweiten Teils (30) aufnehmen.

5. Blende gemäß Erfindungsanspruch 2 oder 3, gekennzeichnet dadurch, daß an beiden äußeren Enden der Unterkante der Sonnenblende (1) zwei Löcher (10, 11) mit senkrechter Achse angebracht sind, in die jeweils der Haken (17) des genannten ersten Teils (40) des besagten Verbindungssystems und der zweite Stab (7) des genannten zweiten Teils (30) eingeführt werden können. Zwecks Schließung der besagten Löcher (10, 11) sind zwei Stopfen vorgesehen für den Fall, daß die besagte Blende (2) an der Sonnenblende (1) nicht befestigt ist.

6. Blende gemäß Erfindungsanspruch 2 oder 3, gekennzeichnet dadurch, daß der Haken (18) des ersten Teils (40) des genannten Verbindungssystems zum Teil in Form einer Zange ausgebildet ist, die an besagter Sonnenblende (1) befestigt ist.

7. Blende gemäß einer der Erfindungsansprüche von 2 bis 6, gekennzeichnet dadurch, daß eine Einbuchtung (4) in der Blende (2) vorgesehen ist, um den besagten Haken (17) aufzunehmen.

8. Blende gemäß einer der Erfindungsanspruch von 2 bis 6, gekennzeichnet dadurch, daß der genannte Haken (18) so ausgeformt wird, daß er der Form der oberen Kante der besagten Blende (2) entspricht.

9. Blende gemäß einer der vorstehenden Erfindungsansprüche, gekennzeichnet dadurch, daß sie mit einer anpaßbaren Einfassung (5) ausgestattet ist.
